# EUROPÄISCHE PATENTANMELDUNG

(11) **EP 1 211 483 A2**
(43) Veröffentlichungstag der Anmeldung: **05.06.2002**
(21) Anmeldenummer: 01126997.4
(22) Anmeldetag: 14.11.2001
(51) Int. Cl.: G01B 21/22

(54) **Verfahren zur Ermittlung der linearen Position oder der Winkelposition eines beweglichen Körpers**

(30) Priorität: 30.11.2000 DE 10059433
(71) Anmelder: Hella KG Hueck & Co., 59552 Lippstadt (DE)
(72) Erfinder: Kost, Norbert, 56597 Erwitte (DE); Irle, Henning, 59557 Lippstadt (DE); Schmidt, Franz-Josef, 33154 Salzkotten (DE)

(57) **Zusammenfassung**

Beschrieben wird Verfahren zur Ermittlung der linearen Position oder der Winkelposition eines beweglichen Körpers, wobei die Position aus den Meßwerten von mindestens zwei Meßgrößen berechnet wird, wobei von der ersten Meßgröße sowohl vor als auch nach der Erfassung des Meßwertes für die zweite Meßgröße jeweils mindestens ein Meßwert erfaßt wird und wobei aus den erfaßten Meßwerten der ersten Meßgröße ein, gemäß der zeitlichen Abstände zum Zeitpunkt der Erfassung des Meßwertes für die zweite Meßgröße gewichteter Mittelwert berechnet wird.

## Beschreibung

Die Erfindung betrifft ein Verfahren zur Ermittlung der linearen Position oder der Winkelposition eines beweglichen Körpers, wobei die Position aus den Meßwerten von mindestens zwei Meßgrößen berechnet wird.

Bei Sensoren entspricht es heute dem Stand der Technik, Sensoren möglichst verhältnisbildend zu gestalten, um Fehler wie z. B. Verstärkungs- oder Temperaturdriften klein zu halten. Dies führt jedoch dazu, daß man vor der Verhältnisbildung immer zwei oder mehr Einzelmessungen durchführen muß. Auch wenn Analog-Digital-Wandler heute schon recht schnell sind, kann die Signaländerung innerhalb eines Meßdurchlaufes nicht immer vernachlässigt werden.

Um derartige Probleme klein zu halten, wird in der Patentschrift DE 197 39 823 A1 ein Verfahren vorgeschlagen, bei dem die Meßwerte gleichzeitig gemessen werden. Dies bedeutet konkret, daß für jeden Meßwert ein eigener Vorverstärker und Analog-Digital-Wandler erforderlich ist, was einen hohen Aufwand bedeutet.

Die Erfindung hat die Aufgabe ein Meßverfahren mit hoher Genauigkeit zu schaffen, welches von einer besonders einfachen und kostengünstigen Meßapparatur ausgeführt werden kann.

Diese Aufgabe wird erfindungsgemäß dadurch gelöst, daß von der ersten Meßgröße sowohl vor als auch nach der Erfassung des Meßwertes für die zweite Meßgröße jeweils mindestens ein Meßwert erfaßt wird und daß aus den erfaßten Meßwerten der ersten Meßgröße ein, gemäß der zeitlichen Abstände zum Zeitpunkt der Erfassung des Meßwertes für die zweite Meßgröße gewichteter Mittelwert berechnet wird.

Das erfindungsgemäße Verfahren ermöglicht einen besonders einfachen Aufbau der Meßapparatur, da nur ein einziger Verstärker und nur ein einziger Analog-Digital-Wandler für alle Eingangssignale benötigt wird.

Die Signale werden im Multiplexverfahren nacheinander gemessen. Insbesondere kompensieren sich durch diese Anordnung die Verstärkungsfehler des Vorverstärkers, weil sie für beide Signale identisch wirken.

In der DE 197 39 823 A1 wurde bereits richtig erkannt, daß Verzögerungen zwischen der Erfassung des ersten und des zweiten Meßwertes zu Fehlern führen können. Das erfindungsgemäße Verfahren kompensiert diese Fehler weitestgehend. Das Konzept beruht auf der Erkenntnis, daß bei den betrachteten Winkel- und Positionssensoren die Änderungsgeschwindigkeiten der Eingangssignale in dem relevanten Zeitraum von z.B. 100µs als konstant angesehen werden können. Das heißt, die Bewegung des Sensors ist in diesem Zeitraum nahezu gleichförmig.

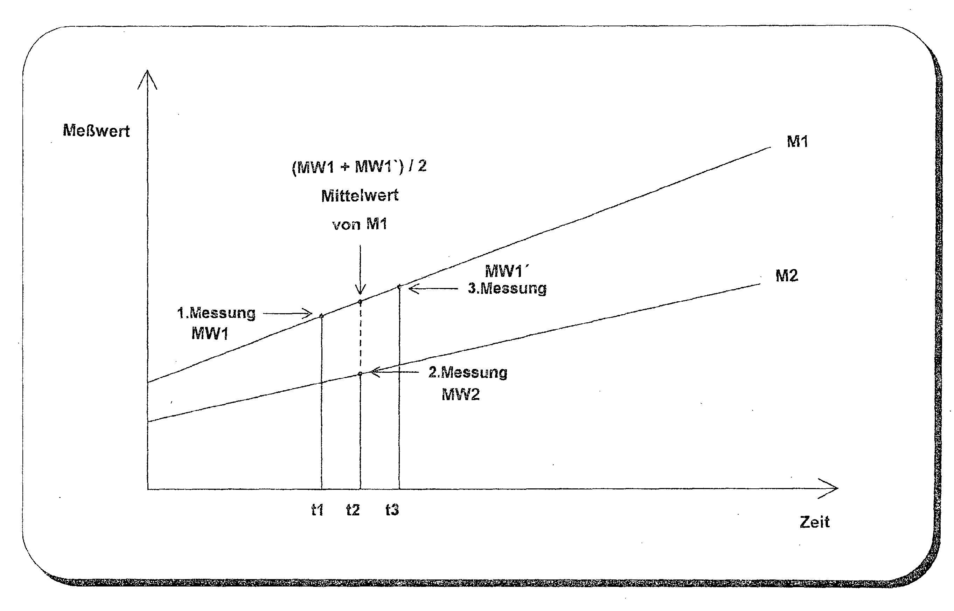

Unterstellt man also eine im wesentlichen konstante Winkel- oder Weggeschwindigkeiten, so kann man die Auswirkung der Verzögerung leicht kompensieren; die einzige Figur verdeutlicht diesen Sachverhalt.

Die Meßgrößen (M1, M2) seien beispielsweise die Ausgangssignale von zwei Wegbzw. von zwei Winkelsensoren, die auf unterschiedliche Weise von der Position abhängen und die zur Erhöhung der Genauigkeit von einer nicht dargestellten Einrichtung ratiometrisch ausgewertet werden.

Zunächst wird die erste Meßgröße M1 zum Zeitpunkt t1 gemessen, wobei sich der Meßwert 1 (MW1) ergibt. Anschließend zum Zeitpunkt t2 wird der Meßwert MW2 für die zweite Meßgröße (M2) erfaßt. Da der Wert von MW2 (und auch von MW1) über der Zeit jedoch nicht konstant ist, führt dies zu einem Meßfehler, weil die zeitliche Zuordnung der beiden Meßwerte nicht mehr korrekt ist.

Die Kompensation des Fehlers wird nun dadurch erreicht, daß zum Zeitpunkt t3 erneut ein Meßwert (MW1') für die erst Meßgröße (M1) gemessen wird und der Mittelwert (MW1 + Mw1') / 2 aus der 1. und 3. Messung gebildet wird. Eine solche, besonders einfache Mittelung ergibt sich, wenn die Zeitabstände zwischen der 1. und 2. bzw. der 2. und 3. Messung gleich groß sind. Sind die Zeitabstände zwischen der 1. und 2. bzw. der 2. und 3. Messung dagegen verschieden groß, wird ein entsprechend der Zeitabstände gewichteter Mittelwert berechnet.

Das erfindungsgemäße Verfahren läßt sich selbstverständlich weiterbilden, indem der Mittelwert der ersten Meßgröße (M1) aus mehr als zwei erfaßten Meßwerten berechnet wird. Auch für die zweite Meßgröße (M2) kann ein Mittelwert aus mehreren Meßwerten gebildet werden. Ebenso ist es denkbar, zuerst mehrere Meßwerte für die erste Meßgröße (M1) zu erfassen und anschließend einen oder mehrere Meßwerte für die zweite Meßgröße (M2) zu bestimmen.

Alle diese Weiterbildungen beruhen ebenfalls auf dem erfindungsgemäßen Prinzip, zumindest für eine Meßgröße mittels linearer Inter- oder Extrapolation einen Meßwert für einen Zeitpunkt zu bestimmen, an dem der Meßwert für die zweite Meßgröße bekannt ist. Der Meßwert für die zweite Meßgröße kann dabei entweder zum diesem Zeitpunkt direkt gemessen oder ebenfalls aus mehreren zeitlich aufeinanderfolgenden Messungen berechnet sein. Erfindungswesentlich ist, daß in allen Fällen sämtliche Meßwerte für die erste und die zweite Meßgröße zeitlich nacheinander erfolgen und sämtliche Messungen durch die gleiche Meßapparatur erfolgen können.

### Bezugszeichen

- M1: erste Meßgröße
- M2: zweite Meßgröße
- MW1, MW1': Meßwerte der ersten Meßgröße
- MW2: Meßwert der zweiten Meßgröße
- Mittelwert: (MW1 + MW1') / 2

## Patentansprüche

1. Verfahren zur Ermittlung der linearen Position oder der Winkelposition eines beweglichen Körpers, wobei die Position aus den Meßwerten von mindestens zwei Meßgrößen berechnet wird,
**dadurch gekennzeichnet,**
- **daß** von der ersten Meßgröße (M1) sowohl vor als auch nach der Erfassung des Meßwertes (MW2) für die zweite Meßgröße (M2) jeweils mindestens ein Meßwert (MW1, MW1') erfaßt wird und
- **daß** aus den erfaßten Meßwerten (MW1, MW1') der ersten Meßgröße (M1) ein, gemäß der zeitlichen Abstände zum Zeitpunkt der Erfassung des Meßwertes (MW2) für die zweite Meßgröße (M2) gewichteter Mittelwert berechnet wird.

2. Verfahren nach Anspruch 1, **dadurch gekennzeichnet, daß** die Meßwerte (MW1, MW1') der ersten Meßgröße (M1) in gleichgroßen Zeitabständen zur Erfassung des Meßwertes (MW2) der zweiten Meßgröße (M2) erfaßt werden.

3. Verfahren nach Anspruch 1, **dadurch gekennzeichnet, daß** für die zweite Meßgröße (M2) ebenso wie die erste Meßgröße (M1) mehrere Meßwerte erfaßt werden und die Meßwerte der zweiten Meßgröße (M2) ebenfalls zeitlich gemittelt werden.

4. Verfahren nach Anspruch 1, **dadurch gekennzeichnet, daß** zur Erfassung der Meßwerte (MW1, MW1', MW2) für die erste und die zweite Meßgröße (M1, M2) die gleiche Meßwerterfassungseinrichtung verwendet wird.

5. Verfahren nach Anspruch 1, **dadurch gekennzeichnet, daß** die Meßgrößen (M1, M2) verschiedene Positionsabhängigkeiten aufweisen und daß die gemittelten Meßwerte dieser Meßgrößen ratiometrisch ausgewertet werden.
